(19) Europäisches Patentamt / European Patent Office / Office européen des brevets

(11) EP 3 694 225 A1

(12) EUROPEAN PATENT APPLICATION
published in accordance with Art. 153(4) EPC

(43) Date of publication:
**12.08.2020 Bulletin 2020/33**

(21) Application number: **18864667.3**

(22) Date of filing: **03.10.2018**

(51) Int Cl.:
***H04R 7/02*** *(2006.01)* ***B32B 17/10*** *(2006.01)*
***C03C 27/06*** *(2006.01)* ***H04R 1/02*** *(2006.01)*
***H04R 7/08*** *(2006.01)*

(86) International application number:
**PCT/JP2018/037116**

(87) International publication number:
**WO 2019/070004 (11.04.2019 Gazette 2019/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.10.2017 JP 2017194637**

(71) Applicant: **AGC Inc.**
**Chiyoda-ku**
**Tokyo 100-8405 (JP)**

(72) Inventors:
- **SAKURAI, Kento**
  **Tokyo 100-8405 (JP)**
- **AKIYAMA, Jun**
  **Tokyo 100-8405 (JP)**
- **TAHARA, Shinya**
  **Tokyo 100-8405 (JP)**

(74) Representative: **Müller-Boré & Partner**
**Patentanwälte PartG mbB**
**Friedenheimer Brücke 21**
**80639 München (DE)**

# (54) GLASS PLATE CONSTRUCT

(57) The purpose of the present invention is to provide a glass plate construct that realizes desirable visibility when applied to a display, etc. This glass plate construct is provided with at least two plates, a liquid layer held between two adjacent plates among the at least two plates, and a sealing material provided in at least a portion of the periphery of the two plates so as to seal the liquid layer, at least one of the two plates being a glass plate, and the photorefractive index difference between the liquid layer and the sealing material being 0.015 or less.

[Fig. 1]

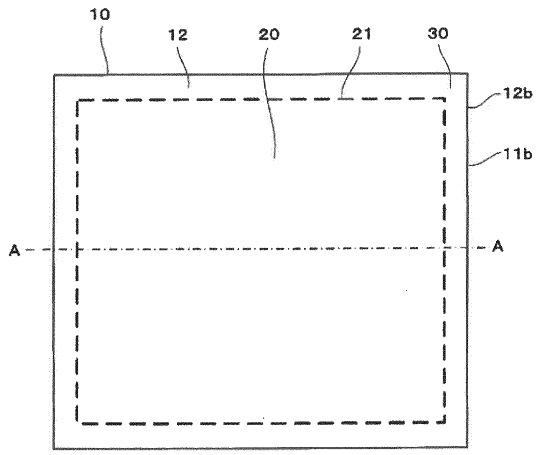


(a)

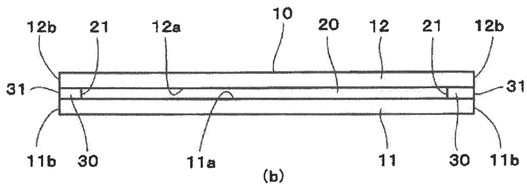


(b)

EP 3 694 225 A1

## Description

TECHNICAL FIELD

The present invention relates to a glass sheet composite attaining satisfactory visibility and having satisfactory acoustic performance, and to a diaphragm and an opening member each including the glass sheet composite.

BACKGROUND ART

A cone paper or resin has been generally used as a diaphragm for loudspeakers or microphones. Such a material has a high loss coefficient, vibration due to resonance hardly occurs therein, and thus, is thought to have good sound reproduction performance in the audible range. However, since the acoustic velocity is low in any of these materials, when a high frequency causes the material excitation, vibration of the material is less likely to follow the acoustic wave frequency, and divided vibration readily occurs. It is therefore difficult to output a desired sound pressure particularly in a high-frequency range.

In recent years, the range required to be reproduced for a high-resolution sound source, etc. is a high-frequency region of 20 kHz or more. This region is a range supposed to be poorly audible by human ear, but it is preferred that the sonic vibration in the range above can be reproduced with high fidelity, because it provides a stronger emotional impact to a listener, for example, it makes the listener feel a strong realistic sensation.

Accordingly, it may be conceived that a material having a high velocity of sound propagation therethrough, such as a metal, ceramic, or glass, is used in place of the cone paper or resin.

CITATION LIST

PATENT LITERATURE

Patent Document 1: JP-A-5-227590

NON-PATENT LITERATURE

Non-Patent Document 1: Olivier Mal et. al., "A Novel Glass Laminated Structure for Flat Panel Loudspeakers", AES Convention 124, 7343.

SUMMARY OF INVENTION

TECHNICAL PROBLEM

Known as diaphragms for loudspeakers are a diaphragm including one glass sheet (Patent Document 1) and a laminated glass having a butyral-based resin layer between two glass sheets (Non-Patent Document 1).

In cases when a glass sheet composite such as, in particular, the laminated glass proposed in Non-Patent Document 1 is disposed in the viewing area of a display or the like, it is possible to produce sounds from the viewing area. In such applications, it is desirable that the boundary between the liquid layer sealed up in the glass sheet composite and the seal material for the sealing is made as unnoticeable as possible.

Accordingly, an object of the present invention is to provide a glass sheet composite which, when used in applications such as displays, attains preferred visibility.

SOLUTION TO PROBLEM

The glass sheet composite of the present invention includes at least two sheets, a liquid layer held between two adjacent sheets of the at least two sheets, and a seal material provided to at least some of peripheries of the two sheets so as to seal up the liquid layer, in which at least one of the two sheets is a glass sheet and the difference in photorefractive index between the liquid layer and the seal material is0.015 or less.

The diaphragm of the present invention includes the glass sheet composite and at least one vibrator disposed on one or both surfaces of the glass sheet composite.

The opening member of the present invention includes the glass sheet composite or the diaphragm.

ADVANTAGEOUS EFFECTS OF INVENTION

According to the glass sheet composite of the present invention, since the difference in photorefractive index between the liquid layer and the seal material is 0.015 or less, the boundary therebetween is difficult to perceive and this glass sheet composite can appear to be a single glass sheet. Even if the boundary has been disposed in the (whole) viewing area of the glass sheet composite, this boundary does not lessen the visibility. There is no need of disposing a frame for hiding the boundary, making it easy to render a frame-less glass sheet composite possible. It is hence possible to attain improvements in design as well as acoustic performance, improvements in the freedom of design, and cost reductions.

BRIEF DESCRIPTION OF DRAWINGS

[Fig. 1] Fig. 1 shows an example of the glass sheet composite according to the present invention; (a) is a front view and (b) is a cross-sectional view along A-A of (a).

[Fig. 2] Fig. 2 is a diagrammatic view showing one embodiment of a liquid layer and a seal material which have been applied to a surface of a first sheet of a glass sheet composite according to the present invention.

[Fig. 3] Fig. 3 (a) and (b) are schematic views showing steps for producing a glass sheet composite according to the present invention.

[Fig. 4] Fig. 4 is a table showing the kinds of liquid layers according to the present invention and the refractive indices thereof at different wavelengths.

[Fig. 5] Fig. 5 is a table showing the kinds of seal materials according to the present invention and the refractive indices thereof at different wavelengths.

[Fig. 6] Fig. 6 is a table showing Example data on evaluation of the visibility of the seal material/liquid layer boundaries of glass sheet composites according to the present invention.

[Fig. 7] Fig. 7 (a) to (f) are views illustrating the various shapes of glass sheet composites according to the present invention.

[Fig. 8] Fig. 8 is cross-sectional views showing the shapes of edge surfaces of glass sheet composites according to the present invention; (a) shows a first example, (b) shows a second example, and (c) shows a third example.

[Fig. 9] Fig. 9 is a table showing liquid ingredient/seal material combinations according to the present invention.

## DESCRIPTION OF EMBODIMENTS

Details and other features of the present invention are described below based on embodiments of the present invention. Here, in the following drawings, the same or corresponding reference numeral is assigned to the same or corresponding members or parts, and duplicated description is thereby omitted. In addition, unless otherwise specified, the drawings are not intended to show a relative ratio among members or parts. Accordingly, specific dimensions may be properly selected in the context of the following non-limiting embodiments.

Furthermore, "-" indicating a numerical range in the present description is used in the sense of including the numerical values set forth before and after the "-" as a lower limit value and an upper limit value.

### (Outline of the Glass Sheet Composite)

The glass sheet composite of the present invention includes at least two sheets, a liquid layer held between two adjacent sheets of the at least two sheets, and a seal material provided to at least some of peripheries of the two sheets so as to seal up the liquid layer, in which at least one of the two sheets is a glass sheet and the difference in photorefractive index between the liquid layer and the seal material is 0.015 or less.

It is useful to make the refractive indices thereof close to each other in order to increase the transmittance of the glass sheet composite. Specifically, the closer the refractive indices of the liquid layer and seal material, which are held between two glass sheet composites, to each other, the more reflection or interference in the boundary therebetween is prevented. Such configuration is hence preferred. The boundary in this configuration does not lessen the visibility through the glass sheet. The difference in photorefractive index between the liquid layer and the seal material is preferably 0.015 or less, more preferably 0.01 or less.

In case where the sealed liquid layer (liquid ingredient) and the seal material are different substances having different photorefractive indexes and are disposed over the (whole) viewing area of a display as an example of the glass sheet composite, then the boundary between the two is noticed due to the light transmitted from the back side and the visibility is lessened. The color difference ΔE*ab between the liquid layer (liquid ingredient) and the seal material is preferably 5% or less, more preferably 3% or less, especially preferably 1% or less. The proportion of the difference in haze between the liquid layer (liquid ingredient) and the seal material is preferably 5% or less, more preferably 3% or less, especially preferably 1% or less. Furthermore, the difference between the absolute values of the hazes thereof is preferably 1.0 or less, more preferably 0.5 or less, especially more preferably 0.1 or less.

In the glass sheet composite of the present invention, by reducing the difference in refractive index between the two to or below the given value, the boundary between the two can be made difficult to notice. Even when the liquid layer and the seal material are disposed over the (whole) viewing area of the glass sheet composite, the visibility is not lessened. In addition, there is no need of disposing a frame for hiding the boundary, and a frame-less glass sheet composite is more easily rendered possible. It is hence possible to attain improvements in design as well as acoustic performance, improvements in the freedom of design, and cost reductions.

Meanwhile, in cases when the glass sheet composite has a high linear transmittance, this glass sheet composite can be applied as a light-transmitting member. Because of this, the glass sheet composite should have a visible-light transmittance, as determined in accordance with Japanese Industrial Standards (JIS R3106-1998), of preferably 60% or higher, more preferably 65% or higher, still more preferably 70% or higher. Examples of applications for the light-transmitting member include transparent loudspeakers, transparent microphones, and opening members for buildings or vehicles.

The seal material held between the two sheets has been provided to the whole peripheries of the two sheets. This configuration prevents the liquid layer held inside the seal material from leaking out and thereby improves the quality of the glass sheet composite. The glass sheet composite may include three or more sheets and, in this case also, the liquid layer is held between two adjacent sheets by the seal material.

It is preferable that the edge surfaces of the two sheets and the edge surfaces of the seal material form a single surface at each edge. Thus, since the edge surfaces of the sheets and the edge surfaces of the seal material are flush with each other, a glass sheet composite having a preferable appearance can be provided.

At least one of the two sheets has an edge surface including a tapered surface, and an edge surface of the seal material has a curved surface continuous with the tapered surface of the sheet. Due to this configuration, sharp angles in edge portions of the plate can be removed to attain safety, and the area of contact between the seal material and the sheet is increased, making it possible to improve the sealing performance.

It is preferable that the glass sheet composite according to the present invention has a loss coefficient at 25°C of $1\times 10^{-2}$ or higher and that at least one sheet has a sheet-thickness-direction longitudinal wave acoustic velocity of $4.0\times10^3$ m/s or higher. Having a high loss coefficient means that the vibration damping capacity is high.

As for the loss coefficient, a value calculated by a half-width method is used. Denoting f as the resonant frequency of a material and W as a frequency width at a point decreased by -3 dB from the peak value of the amplitude h (namely, the point of (maximum amplitude) -3 [dB]), the loss coefficient is defined as a value represented by {W/f}.

In order to prevent the resonance, the loss coefficient may be increased, namely, this means that the frequency width W becomes relatively large with respect to the amplitude h and the peak becomes broader.

Loss coefficient is a value inherent in a material, etc. For example, in the case of a glass sheet alone, the loss coefficient varies depending on the composition, relative density, etc. thereof. Loss coefficient can be determined by a dynamic modulus test such as a resonance method.

The term "longitudinal wave acoustic velocity" means a velocity at which a longitudinal wave propagates in an object. The longitudinal wave acoustic velocity can be measured by the ultrasonic pulse method described in Japanese Industrial Standards (JIS-R1602-1995).

(Liquid Layer)

Since the glass sheet composite according to the present invention includes a layer made of a liquid (liquid layer) disposed between at least two sheets (at least a pair of sheets), a high loss coefficient can be achieved. In particular, the loss coefficient can be made larger by controlling the viscosity and surface tension of the liquid layer to fall within suitable ranges. This is considered attributed to the fact that, unlike the case of disposing a pair of sheets with an adhesive layer interposed therebetween, the pair of sheets is not fixed and continues maintaining the vibration characteristics of each individual sheet.

The liquid layer preferably has a viscosity coefficient at 25°C of $1\times10^{-4}$ to $1\times10^3$ Pa·s and a surface tension at 25°C of 15 mN/m to 80 mN/m. In case where the viscosity thereof is too low, this liquid layer is less apt to transmit vibrations. In case where the viscosity thereof is too high, the two sheets respectively on both sides of the liquid layer are fixed to exhibit a vibration behavior as one sheet, becoming less effective in damping vibration due to resonance. Meanwhile, in case where the surface tension thereof is too low, the sheets have reduced adhesion therebetween and are less apt to transmit vibrations. In case where the surface tension thereof is too high, the two sheets respectively on both sides of the liquid layer are apt to be fixed to exhibit a vibration behavior as one sheet, becoming less effective in damping vibration due to resonance.

The liquid layer has a viscosity coefficient at 25°C of more preferably $1\times10^{-3}$ Pa·s or higher, still more preferably $1\times10^{-2}$ Pa·s or higher. The liquid layer has a viscosity coefficient at 25°C of more preferably $1\times10^2$ Pa·s or less, still more preferably $1\times10$ Pa·s or less.

The liquid layer has a surface tension at 25°C of more preferably 17 mN/m or higher, still more preferably 30 mN/m or higher.

The viscosity coefficient of the liquid layer can be measured with a rotational viscometer, etc. The surface tension of the liquid layer can be measured by a ring method, etc.

In case where the liquid layer has too high a vapor pressure, some of this liquid layer may vaporize, making the glass sheet composite unable to perform its function. The liquid layer hence has a vapor pressure at 25°C and 1 atm of preferably $1\times10^4$ Pa or less, more preferably $5\times10^3$ Pa or less, still more preferably $1\times10^3$ Pa or less.

The liquid layer having smaller thickness is preferred from the standpoints of enabling the glass sheet composite to retain high rigidity and of transmitting vibrations. Specifically, when the total thickness of the two sheets is 1 mm or less, the liquid layer has a thickness of preferably 1/10 or less, more preferably 1/20 or less, still more preferably 1/30 or less, yet still more preferably 1/50 or less, even still more preferably 1/70 or less, even yet still more preferably 1/100 or less, of the total thickness of the two sheets.

In the case where the total thickness of the two sheets exceeds 1 mm, the liquid layer has a thickness of preferably 100 μm or less, more preferably 50 μm or less, still more preferably 30 μm or less, yet still more preferably 20 μm or less, even still more preferably 15 μm or less, even yet still more preferably 10 μm or less.

A lower limit of the thickness of the liquid layer is preferably 0.01 μm or larger from the standpoints of production efficiency and durability.

It is preferable that the liquid layer is chemically stable and does not react with either of the two sheets lying respectively on both sides of the liquid layer. The term "chemically stable" means, for example, that the liquid layer is less apt to be altered (deteriorated) by light irradiation and undergoes none of solidification, vaporization, decomposition, discoloration, chemical reaction with the glass, and the like at least in the temperature range of -20°C to 70°C.

Examples of ingredients usable as the liquid layer include water, oils, organic solvents, liquid polymers, ionic liquids, and mixtures of two or more of these.

More specific examples thereof include propylene glycol, dipropylene glycol, tripropylene glycol, straight silicone oils (dimethyl silicone oil, methyl phenyl silicone oil, and methyl hydrogen silicone oil), modified silicone oils, acrylic-acid-based polymers, liquid polybutadiene, glycerin paste, fluorochemical solvents, fluororesins, acetone, ethanol, xylene, toluene, water, mineral oil, and mixtures of two or more of these. It is preferable that the liquid layer includes at least one member selected from the group consisting of a dimethyl silicone oil, a methyl phenyl silicone oil, a methyl hydrogen silicone oil, and modified silicone oils, among those. It is more preferable that the liquid layer includes propylene glycol or a silicone oil as a main component.

Also usable as the liquid layer besides those ingredients is a slurry containing particles dispersed therein. Although the liquid layer preferably is a homogeneous fluid from the standpoint of improving the loss coefficient, the slurry is effective in the case of imparting design attractiveness or a function, such as coloration or fluorescence, to the glass sheet composite.

The content of the particles in the liquid layer is preferably 0-10 vol%, more preferably 0-5 vol%.

The particles have a particle diameter of preferably 10 nm to 10 μm, more preferably 0.5 μm or less, from the standpoint of preventing sedimentation.

The liquid layer may contain a fluorescent material from the standpoint of imparting design attractiveness or a function. This liquid layer may be either a slurry liquid layer which contains a particulate fluorescent material dispersed therein or a homogeneous liquid layer in which a liquid fluorescent material has been mixed. Accordingly, the optical function, such as absorbing light and emitting light can be imparted to the glass sheet composite.

(Seal Material)

The seal material is in close contact with the edge surface of one of the two sheets, an edge surface of the liquid layer, and a main surface of the other sheet. In the case where the edge surface of one of the sheets and the edge surface of the liquid layer are perpendicular to the main surface of the other sheet, the seal material, in a cross-sectional view, has an L-shaped contour. This configuration improves the strength of the glass sheet composite.

The seal material preferably has a tapered surface. This seal material can produce the same effect as processing the edge surface of a sheet.

It is preferable that the seal material includes at least one resin selected from the group consisting of a poly(vinyl acetate)-based resin, a poly(vinyl chloride)-based resin, a poly(vinyl alcohol)-based resin, an ethylene-copolymer-based resin, a poly(acrylic ester)-based resin, a cyanoacrylate-based resin, a saturated-polyester-based resin, a polyamide-based resin, a linear-polyimide-based resin, a melamine resin, a urea resin, a phenolic resin, an epoxy-based resin, a polyurethane-based resin, an unsaturated-polyester-based resin, a reactive acrylic resin, a rubber-based resin, a silicone-based resin, a modified-silicone-based resin, and a fluororesin.

(Sheets and Glass Sheet)

The glass sheet composite according to the present invention includes at least two (at least a pair of) sheets disposed so as to sandwich the liquid layer therebetween. At least one of the two sheets is a glass sheet. In this configuration, when either of the sheets resonates, the presence of the liquid layer can prevent the other sheet from resonating or can damp the resonant vibration of the other sheet. The glass sheet composite can hence have a higher loss coefficient than single glass sheets.

It is preferable that, of one of the two sheets constituting the pair of sheets, one sheet and the other sheet have different peak top values of resonant frequency. It is more preferable that the ranges of resonant frequency of the two sheets do not overlap each other. However, even though the range of resonant frequency of one sheet and that of the other sheet overlap each other or the two sheets have the same peak top value, the presence of the liquid layer prevents the resonance of one sheet from causing synchronous vibration to the other sheet and thereby reduces the resonance to some degree. A high loss coefficient can hence be obtained as compared with the case of single sheets.

More specifically, denoting Qa and wa respectively as the resonant frequency (peak top) and the half-width of resonance amplitude of one of the sheets and denoting Qb and wb respectively as the resonant frequency (peak top) and the half-width of resonance amplitude of the other sheet, it is preferable that the relationship represented by the following formula (1) is satisfied.

$$(wa+wb)/4 < |Qa-Qb| \quad (1)$$

The larger the value of the left side of formula (1), the larger the difference (|Qa-Qb|) in resonant frequency between the two sheets and the higher the loss coefficient. It is hence preferable that the two sheets have such properties.

Accordingly, it is more preferable that the following formula (2) is satisfied, and it is still more preferable that the following formula (3) is satisfied.

$$(wa+wb)/2 < |Qa-Qb| \quad (2)$$

$$(wa+wb)/1 < |Qa-Qb| \quad (3)$$

The resonant frequency (peak top) and half-width of resonance amplitude of each sheet can be determined by the same method as the loss coefficient of the glass sheet composite.

It is preferred that the mass difference between one sheet and the other sheet is smaller, and it is more preferred that there is no mass difference therebetween. In cases when the sheets have different mass, the resonance of the lighter sheet can be reduced by the heavier sheet but it is difficult to reduce the resonance of the heavier sheet by the lighter sheet. This is because if the mass ratio is unbalanced, vibrations due to resonance cannot theoretically be mutually eliminated because of the difference in inertial force.

The mass ratio between the two sheets which is represented by (one sheet)/(the other sheet) is preferably 0.1-10.0 (from 1/10 to 10/1), more preferably 0.5-2.0 (from 5/10 to 10/5), even more preferably 1.0 (10/10; mass difference, 0).

The smaller the thicknesses of one sheet and the other sheet, the more likely the sheets are to adhere to each other with the liquid layer interposed therebetween and the smaller the amount of energy necessary for vibrating the sheets. Hence, for use in diaphragm applications as in loudspeakers, the smaller the sheet thicknesses, the better. Specifically, the sheet thickness of each of the two sheets is preferably 15 mm or less, more preferably 10 mm or less, still more preferably 5 mm or less, yet still more preferably 3 mm or less, even still more preferably 1.5 mm or less, even yet still more preferably 0.8 mm or less. Meanwhile, if the thickness is too small, the impact of surface defects of the sheets becomes noticeable, cracks are likely to occur, and strengthening treatment becomes difficult. Hence, the thickness thereof is preferably 0.01 mm or larger, more preferably 0.05 mm or larger.

For use in opening member applications in buildings or vehicles, which are reduced in the occurrence of an abnormal noise attributed to a resonance phenomenon, the thicknesses of one sheet and the other sheet are each preferably 0.5-15 mm, more preferably 0.8-10 mm, still more preferably 1.0-8 mm.

It is preferable, for use in diaphragm applications, that one sheet and/or the other sheet has a high loss coefficient, because this enables the glass sheet composite to show enhanced vibration damping. Specifically, the loss coefficient at 25°C of the sheet(s) is preferably $1\times10^{-4}$ or higher, more preferably $3\times10^{-4}$ or higher, still more preferably $5\times10^{-4}$ or higher. There is no particular upper limit, but the loss coefficient thereof is preferably $5\times10^{-3}$ or less from the standpoints of productivity and manufacturing cost. It is more preferable that both the one sheet and the other sheet have that loss coefficient.

The loss coefficient of each sheet can be determined by the same method as the loss coefficient of the glass sheet composite.

It is preferable, for use in diaphragm applications, that one sheet and/or the other sheet has a high longitudinal wave acoustic velocity in the sheet thickness direction, because the sound reproducibility in a high-frequency region is enhanced. Specifically, the longitudinal wave acoustic velocity of the sheet(s) is preferably $4.0\times10^3$ m/s or higher, more preferably $5.0\times10^3$ m/s or higher, still more preferably $6.0\times10^3$ m/s or higher. There is no particular upper limit, but the longitudinal wave acoustic velocity thereof is preferably $7.0\times10^3$ m/s or less from the standpoints of sheet productivity and raw material cost. It is more preferable that both the one sheet and the other sheet satisfy that acoustic velocity.

The acoustic velocity of each sheet can be measured by the same method as the longitudinal wave acoustic velocity of the glass sheet composite.

In the glass sheet composite according to the present invention, at least one of the one sheet and the other sheet is constituted of a glass sheet. The material of the other sheet is not limited, and any of various non-glass sheets including a metal sheet made of a metal, a resin sheet made of a resin, and a ceramic sheet made of a ceramic can be used. From the standpoints of design attractiveness and processability, it is preferred to use a resinous sheet or a composite material thereof. Especially preferred is to use a resinous sheet made of an acrylic resin, a polyimide resin, a polycarbonate resin, a PET resin, or an FRP material. From the standpoint of vibration characteristics, it is preferred to use a ceramic or metal material having high rigidity. More preferred are, for example, ceramics and single-crystal materials such as $Al_2O_3$, SiC, $Si_3N_4$, AlN, mullite, zirconia, yttria, and YAG and metal and alloy materials such as steel, aluminum, titanium, magnesium, and tungsten carbide. It is especially preferable that such ceramic materials are ones having light-transmitting properties.

The composition of the glass sheet constituting at least one sheet is not particularly limited. However, the contents of components thereof are, for example, preferably in the following ranges.

40-80 mass% $SiO_2$, 0-35 mass% $Al_2O_3$, 0-15 mass% $B_2O_3$, 0-20 mass% MgO, 0-20 mass% CaO, 0-20 mass% SrO, 0-20 mass% BaO, 0-20 mass% $Li_2O$, 0-25 mass% $Na_2O$, 0-20 mass% $K_2O$, 0-10 mass% $TiO_2$, and 0-10 mass% $ZrO_2$. These components account for at least 95 mass% of the entire glass.

More preferably, the glass sheet has the composition including the following components in amounts within the following ranges.

55-75 mass% $SiO_2$, 0-25 mass% $Al_2O_3$, 0-12 mass% $B_2O_3$, 0-20 mass% MgO, 0-20 mass% CaO, 0-20 mass% SrO, 0-20 mass% BaO, 0-20 mass% $Li_2O$, 0-25

mass% $Na_2O$, 0-15 mass% $K_2O$, 0-5 mass% $TiO_2$, and 0-5 mass% $ZrO_2$. These components account for at least 95 mass% of the entire glass.

A specific modulus is a value obtained by dividing the Young's modulus by the density, and the higher the specific modulus of the glass sheet, the higher the rigidity of the glass sheet. Specifically, the glass sheet has the specific modulus of preferably $2.5\times10^7$ $m^2/s^2$ or higher, more preferably $2.8\times10^7$ $m^2/s^2$ or higher, still more preferably $3.0\times10^7$ $m^2/s^2$ or higher. Although there is no particular upper limit, the specific modulus thereof is preferably $4.0\times10^7$ $m^2/s^2$ or less from the standpoint of formability during glass production. The Young's modulus can be determined by the ultrasonic pulse method described in Japanese Industrial Standards (JIS-R1602-1995).

The lower the specific gravity of each glass sheet, the smaller the amount of energy necessary for vibrating the glass sheet. Specifically, the glass sheet has the specific gravity of preferably 2.8 or less, more preferably 2.6 or less, still more preferably 2.5 or less. Although there is no particular lower limit, the specific gravity thereof is preferably 2.2 or higher.

(Glass Sheet Composite)

It is possible to color at least one of the sheets and/or the liquid layer, which constitute the glass sheet composite. This is useful in the case where design attractiveness or a function, such as IR cut, UV cut, or privacy glass, is desired to be given to the glass sheet composite.

At least one glass sheet suffices for the sheets constituting the glass sheet composite, but two or more glass sheets may be used. In this case, glass sheets which all differ in composition may be used or glass sheets which all have the same composition may be used. Glass sheets having the same composition may be used in combination with a glass sheet having a different composition. Among others, it is preferred to use two or more kinds of glass sheets differing in composition, from the standpoint of vibration damping.

Similarly, as to the mass and thickness, the glass sheets may be all different, may be all the same, or some may be different. Above all, from the standpoint of vibration damping, all of the constituent glass sheets preferably have the same mass.

A physically strengthened glass sheet or a chemically strengthened glass sheet may be used as at least one of the glass sheets constituting the glass sheet composite. This is useful in preventing the glass sheet composite from breaking. When an increase in the strength of the glass sheet composite is desired, it is preferable that a physically strengthened glass sheet or a chemically strengthened glass sheet is used as the glass sheet located in an outermost surface of the glass sheet composite, and it is more preferable that all of the constituent glass sheets are each a physically strengthened glass sheet or a chemically strengthened glass sheet.

From the standpoint of increasing the longitudinal wave acoustic velocity and the strength, it is also useful to use a crystallized glass or a phase-separated glass as a glass sheet. Especially when an increase in the strength of the glass sheet composite is desired, it is preferred to use the crystallized glass or the phase-separated glass as the glass sheet located in an outermost surface of the glass sheet composite.

A coating or a film may be formed on at least one outermost surface of the glass sheet composite, so long as the effects of the present invention are not impaired. Formation of a coating or attachment of a film is suitable for scratch protection, etc.

It is preferred that the coating of the film has a thickness of 1/5 or less of the sheet thickness of the surface glass sheet. The coating and the film can be conventionally known ones. Examples of the coating include a water-repellent coating, a hydrophilic coating, a water sliding coating, an oil-repellent coating, a light reflection preventive coating, a heat shielding coating, and a highly reflective coating. Examples of the film include a shatterproof film for glass, a color film, a UV cut film, an IR cut film, a heat-shielding film, an electromagnetic wave shielding film, and a screen film for projectors.

The shape of the glass sheet composite can be appropriately designed in accordance with applications, and may be a flat plate-like shape or a curved surface shape. The shape thereof may be a rectangular, triangular, circular, or polygonal shape, etc. in a plan view.

In order to raise the output sound pressure level in a low-frequency range, the glass sheet composite can be made to have a structure including an enclosure or a baffle plate. Although the material of the enclosure or baffle plate is not particularly limited, it is preferable to use the glass sheet composite of the present invention.

A frame may be provided to at least one outermost surface of the glass sheet composite so long as the effects of the present invention are not impaired. The frame is useful, for example, when it is desired to enhance the rigidity of the glass sheet composite or maintain a curved surface shape of the glass sheet composite. As the material of the frame, a conventionally known material may be used. For example, use can be made of ceramics and single-crystal materials such as $Al_2O_3$, SiC, $Si_3N_4$, AlN, mullite, zirconia, yttria, and YAG, metal and alloy materials such as steel, aluminum, titanium, magnesium, and tungsten carbide, composite materials such as FRPs, resin materials such as acrylics and polycarbonates, glass materials, and wood.

The frame to be used has a weight preferably 20% or less, more preferably 10% or less, of the weight of the glass sheet.

A seal member may be interposed between the glass sheet composite and the frame. Furthermore, at least some of an outer circumferential edge portion of the glass sheet composite may be sealed by a seal member which does not hinder the glass sheet composite from vibrating. As the seal members, use can be made of a highly elastic rubber, a resin, a gel, etc.

As the resin for the seal members, use can be made of acrylic, cyanoacrylate-based, epoxy-based, silicone-based, urethane-based, and phenolic resins. Examples of curing methods include one-pack type, two-pack mixing type, heat curing, ultraviolet curing, and visible light curing.

A thermoplastic resin (hot-melt bond) is also usable. Examples thereof include (ethylene/vinyl acetate)-based, polyolefin-based, polyamide-based, synthetic rubber-based, acrylic, and polyurethane-based resins.

As the rubber, use can be made of natural rubber, synthetic natural rubber, butadiene rubber, styrene-butadiene rubber, butyl rubber, nitrile rubber, ethylene-propylene rubber, chloroprene rubber, acrylic rubber, chlorosulfonated polyethylene rubber (Hypalon), urethane rubber, silicone rubber, fluororubber, ethylene-vinyl acetate rubber, epichlorohydrin rubber, polysulfide rubber (Thiokol), and hydrogenated nitrile rubber.

In case where the thickness t of each seal member is too small, sufficient strength is not ensured. In case where the thickness t thereof is too large, the seal member may hinder vibrations. Consequently, the seal material has the thickness of preferably 10 μm or larger and up to 5 times the overall thickness of the glass sheet composite, and is more preferably 50 μm or larger and smaller than the overall thickness of the glass sheet composite.

At least some portions of the opposed surfaces of the sheets may be coated with the seal member in order to, for example, prevent separation at the interface between each sheet and liquid layer of the glass sheet composite, so long as the effects of the present invention are not impaired. In this case, the area of the seal member-coated portion is preferably 20% or less, more preferably 10% or less, still more preferably 5% or less, of the area of the liquid layer so as not to hinder vibrations.

In order to enhance the sealing performance, edge portions of each sheet can be processed into an appropriate shape. For example, edge portions of at least one of the sheets may be processed by C-chamfering (the sheet has a trapezoidal cross-sectional shape) or R-chamfering (the sheet has an approximately arc cross-sectional shape), thereby increasing the area of contact between the seal member and the sheet. Thus, the strength of adhesion between the seal member and the sheet can be enhanced.

(Diaphragm, Opening Member)

The present invention relates to: a diaphragm including the glass sheet composite and a vibrator; and an opening member including the glass sheet composite.

The diaphragm can be made to function as a loudspeaker, a microphone, an earphone, or a casing's vibrating body or casing's speaker of a mobile device, etc. by disposing, for example, one or more vibration elements or vibration detection elements (vibrators) on one side or both sides of the glass sheet composite. In order to enhance the output sound pressure level, two or more vibration elements are preferably disposed on both sides of the glass sheet composite.

In general, the position of the vibrators in the diaphragm is preferably the central portion of the glass composite, but since the material has a high acoustic velocity and a high damping performance, the vibrator may be disposed at an edge portion of the glass sheet composite. Use of the diaphragm according to the present invention can facilitate reproduction of the sound in a high-frequency region that had been conventionally difficult to be reproduced. In addition, since the size, shape, color, etc. of the glass sheet composite can be freely selected, and a design can be applied thereto, a diaphragm with excellent design can be obtained. Furthermore, by sampling sound or vibration by a sound collecting microphone or a vibration detector disposed on the surface or in the vicinity of the glass sheet composite and generating vibration of the same phase or reverse phase in the glass sheet composite, the sound or vibration sampled can be amplified or canceled.

At this time, in the case where the sound or vibration characteristics at the sampling point above are caused to undergo a change based on a certain acoustic transfer function in the course of propagating to the glass sheet composite, and in the case where an acoustic conversion transfer function is present in the glass sheet composite, the vibration can be accurately amplified or canceled by correcting the amplitude and phase of the control signal by means of a control filter. At the time of constructing the control filter above, for example, the least-square (LMS) algorithm can be used.

In a more specific configuration, for example, the glass sheet composite of the present invention is used as all or at least one of the glass sheets of a double glass. A structure can be thus produced in which the vibration level of the sheet at the inflow side of a sonic vibration to be controlled or the sound pressure level of a space present between glasses is sampled and, after appropriate signal correction by a control filter, output to a vibration element on the glass sheet composite disposed at the outflow side of the sonic vibration.

This diaphragm can be utilized, for example, as a member for electronic devices, in a full-range loudspeaker, a loudspeaker for reproducing a low-pitched sound range of 15 Hz to 200 Hz, a loudspeaker for reproducing a high-pitched sound range of 10 kHz to 100 kHz, a large loudspeaker having a diaphragm area of 0.2 $m^2$ or more, a small loudspeaker having a diaphragm area of 3 $cm^2$ or less, a flat loudspeaker, a cylindrical loudspeaker, a transparent loudspeaker, a mobile device cover glass functioning as a loudspeaker, a TV display cover glass, a display outputting video signals and audio signals from the same surface, a loudspeaker for wearable displays, an electronic display device, and lighting equipment. In addition, the diaphragm can be used as a diaphragm or vibration sensor for headphones, earphones or microphones.

This diaphragm can be used as an interior vibration member of transport machinery such as vehicle, or as an in-vehicle/in-machine loudspeaker and can form, for example, a sideview mirror, a sun visor, an instrument panel, a dashboard, a ceiling, a door, or other interior panels, each functioning as a loudspeaker. In addition, such a member can also be made to function as a microphone and a diaphragm for active noise control.

With respect to other uses, the diaphragm can be used as a diaphragm for ultrasonic generators, a slider for ultrasonic motors, a low frequency generator, a vibrator for propagating sonic vibration in liquid, a water tank and a container each using the vibrator, a vibration element, a vibration detection element, and an actuator material for vibration damping equipment.

The opening member includes, for example, an opening member used for buildings, transport machinery, etc. For example, in the case of using a glass sheet composite less likely to resonate in the frequency band of noise generated from the drive part, etc. of vehicles, airplanes, ships, power generators, etc., an excellent effect of inhibiting generation of particularly such noise can be obtained. In addition, a function such as IR cut, UV cut and coloration can be imparted to the glass sheet composite.

At the time of application as an opening member, a diaphragm in which one or more vibration elements or vibration detection elements (vibrators) are disposed on one side or both sides of the glass sheet composite can be caused to function as a loudspeaker or a microphone. Use of the glass sheet composite according to the present invention can facilitate reproduction of the sound in a high-frequency region that had been conventionally difficult to be reproduced. In addition, since the size, shape, color, etc. of the glass sheet composite is freely selected, and a design can be applied thereto, an opening member also with excellent design can be obtained. Furthermore, by sampling sound or vibration by a sound collecting microphone or a vibration detector disposed on the surface or in the vicinity of the glass sheet composite and generating vibration of the same phase or reverse phase in the glass sheet composite, the sound or vibration sampled can be amplified or canceled.

More specifically, the member can be used as an in-vehicle loudspeaker, an outside-the-vehicle loudspeaker, and a windshield, side glass, rear glass, or roof glass having a sound insulating function. At this time, the structure may be configured to be capable of transmitting or blocking only a specific sonic vibration. It can also be used as a vehicle window, structural member, or decorative plate that has improved water-repellency, snow accretion resistance, ice accretion resistance or antifouling property due to sonic vibration. Specifically, the member can be used as an automotive window glass, mirror, lens or sensor, and a cover glass thereof.

The opening member for buildings can be used as window glass, door glass, roof glass, an interior material, an exterior material, a decorative material, a structural material, an outer wall, a sound insulating board, a sound insulating wall, and a solar cell cover glass, each functioning as a diaphragm and a vibration detecting device. They can also be caused to function as a sound reflecting (reverberation) plate. Furthermore, the above-described water repellency, snow accretion resistance and antifouling property can be enhanced by the sonic vibration.

(Method for Producing the Glass Sheet Composite)

The glass sheet composite according to the present invention can be obtained by disposing a liquid layer and a seal material for sealing up the liquid layer, between a pair of sheets.

Examples of methods of application for the seal material include application with a dispenser, screen printing, spray coating, and application with a spreader. Application with a dispenser is preferred from the standpoints of application thickness and evenness in the width of lines formed by the application.

Formation of the liquid layer also is not particularly limited. For example, a liquid for constituting the liquid layer can be applied to a sheet surface with a dispenser or by a technique such as spin coating, die coating, screen printing, or ink-jet printing.

(Embodiments of the Glass Sheet Composite)

Fig. 1 shows an example of a glass sheet composite 10 of the present invention. Fig. 1(a) is a front view, and Fig. 1(b) is a cross-sectional view along line A-A of Fig. 1(a).

The glass sheet composite 10 includes: a first sheet (one sheet or the other sheet) 11 and a second sheet (the other sheet or one sheet) 12, as at least two sheets; a liquid layer 20 held between the first sheet 11 and the second sheet 12; and a seal material 30 which seals up the liquid layer 20. At least one of the two sheets, i.e., the first sheet 11 and/or the second sheet 12, is constituted of a glass sheet.

The seal material 30 adheres to a main surface 11a of the first sheet 11, a main surface 12a of the second sheet 12, and edge surfaces 21 of the liquid layer 20. Due to this configuration, not only the liquid layer 20 is sealed up by the seal material 30 and is hence prevented from leaking out but also the bonding of the first sheet 11, liquid layer 20, and second sheet 12 is enhanced to increase the strength of the glass sheet composite 10.

Methods for applying the seal material 30 and a liquid ingredient 22 for forming the liquid layer 20 are explained below by reference to Fig. 2.

(Application of Seal Material)

For disposing a seal material 30, a dispenser is used to draw a line having a width of 0.5 mm at a distance of 1 mm from the edge portions, on a central portion of a first sheet 11 having, for example, a length of 100 mm, a width of 100 mm, and a thickness of 0.5 mm.

(Application of Liquid Ingredient)

A liquid ingredient (oil ingredient) 22 is applied with a disperser to a central portion (portion surrounded by the seal material 30) of the first sheet 11 to draw, for example, lines having a line width of 0.5 mm and a line spacing of 4 mm while leaving a 2-mm uncoated area between the applied liquid ingredient and the line of the applied seal material 30, as shown in Fig. 2. With respect to the ejection amount of the liquid ingredient 22, the liquid ingredient 22 is applied while controlling the mass thereof so that the liquid layer 30 to be formed through laminating has a thickness of 3 μm. For example, in the case where the region inside the line of the seal material 30 has a length of 100 mm and a width of 100 mm and a liquid ingredient 22 having a density of 1 g/cm$^3$ is to be applied thereto in a thickness of 3 μm, the desired application may be attained by controlling the ejection mass so as to result in a total application amount of 0.03 g. In this procedure, either of the seal material 30 and the liquid ingredient 22 for forming the liquid layer 20 may be applied first for line drawing.

A first sheet 11 having dimensions of 100 mm × 100 mm × 0.5 mm was prepared. A dimethyl silicone oil having a dynamic viscosity at 25°C of 3,000 (mm$^2$/s) and a methyl phenyl silicone oil were evenly applied as liquid ingredients 22 to the first sheet 11 using a dispenser (SHOTMASTER 400DS-s, manufactured by Musashi Engineering), while leaving an allowance having a width of 5 mm along the edge portions. Furthermore, a seal material (curable resin) 30 was applied in a line width of about 0.5 mm to the edge portions of the first sheet 11. The first sheet 11 and a second sheet 12 are laminated to each other, and thereafter the seal material 30 is cured.

(Laminating Step)

The seal material 30 and the liquid ingredient 22 are applied in the steps described above, and the first sheet 11 thus coated and a second sheet 12 which is uncoated and is equal in kind and size to the first sheet 11 are laminated to each other under a reduced pressure, as shown in Fig. 3. In the reduced-pressure laminating, the pressure is preferably 1,500 Pa or less, more preferably 300 Pa or less, still more preferably 100 Pa or less, especially desirably 10 Pa or less. After the laminating, the seal material 30 is cured by UV irradiation, heating, etc. in accordance with the mode of curing of the seal material 30 used.

During the laminating, the liquid ingredient 22 which has been applied inside spreads and comes into contact with the seal material 30 to apply force thereto from inside, and the seal material 30 spreads mainly outward. Although the seal material 30 spreads outward, the liquid ingredient does not leak out from the space between the first sheet 11 and the second sheet 12 because of surface tension exerted at the edge portions 11b and 12b of the sheets 11 and 12.

(EXAMPLES)

Examples based on the results of examinations of glass sheet composites 10 obtained by the method described above are explained by reference to Fig. 4 to Fig. 6. Fig. 4 shows the results of measurements of the refractive indices at 486, 589, and 656 nm of oils as liquid ingredients 22 with a multi-wavelength Abbe refractometer (DE-M2, manufactured by Atago Co., Ltd.).

Fig. 5 is a table showing a list of seal materials 30 and the refractive indices thereof. The refractive indices of each seal material 30 to be used were determined by forming a thin film thereof on a PTFE plate using an applicator (Type YBM5) manufactured by Kodaira Seisakusho Co., Ltd., curing the thin film by UV irradiation, and then examining the cured film using PRISM COUPLER MODEL 2010/M (manufactured by Metricon Corporation).

Fig. 6 is a table showing the results of an examination in which glass sheet composites 10 of the liquid-including laminate type were produced and evaluated for visibility at the boundary between the liquid layer 20 and the seal material 30. It can be seen from the table that in the case where the seal material 30 was A, for example, use thereof with a dimethyl silicone oil (liquid ingredient b) resulted in an unnoticeable boundary therebetween to attain preferred visibility (see the symbol O in the table), but use thereof with a methyl phenyl silicone oil (liquid ingredient c) resulted in a slightly noticeable boundary therebetween (see the symbol Δ in the table). It can also be seen that the methyl phenyl silicone oil of the liquid layer 20 was satisfactory when used in combination with the seal material 30 which was C, D, E, or F. Values of the difference in refractive index were preferably 0.015 or less, more preferably 0.010 or less, still more preferably 0.005 or less.

Fig. 9 shows combinations of the liquid ingredients shown in Fig. 4 with the seal materials shown in Fig. 5. In Fig. 9, each liquid ingredient/seal material combination in which the average difference therebetween in refractive index at wavelengths of 486, 589, and 656 nm was 0.005 or less is indicated by OO, that in which said average difference was 0.010 or less is indicated by O, and that in which said average difference was 0.015 or less is indicated by □.

The shape of the glass sheet composite 10 can be suitably designed in accordance with applications, and may be a flat platy shape or a curved shape. As shown in Fig. 7, the glass sheet composite 10 may have the shape of a square (Fig. 7(a)), rectangle (Fig. 7(b)), right-angle triangle (Fig. 7(c)), circle (Fig. 7(d)), polygon (Fig. 7(e)), triangle (Fig. 7(f)), etc. in a front view.

(Edge Surface Processing)

Mirror polishing may be performed as edge surface processing. The shape of the edge surfaces 11b and 12b is selected while taking account of appearance, bonding strength, safety, etc.

In the first example shown in Fig. 8(a), the edge surface 11b of the first sheet 11 and the edge surface 12b of the second sheet 12 form a single surface. As in the second example shown in Fig. 8(b), the two edge surfaces 11b and 12b may be tapered-and-curved surfaces so that the edge surface 31 of the seal material 30 is a curved surface continuous with the tapered surfaces. Furthermore, as in the third example shown in Fig. 8(c), only the edge surface 11b of the first sheet 11 may be processed to a tapered-and-curved surface.

The present invention is not limited to the embodiments described above, and modifications, improvements, etc. can be suitable made therein. The constituent elements in the embodiments are each not limited in the material, shape, dimensions, numerical values, form, number, place of disposition, etc. thereof so long as the present invention can be achieved.

While the invention has been described in detail and with reference to specific embodiments thereof, it will be apparent to one skilled in the art that various changes and modifications can be made therein without departing from the spirit and scope thereof. The present invention is based on a Japanese patent application filed on October 4, 2017 (Application No. 2017-194637), the entire contents thereof being incorporated herein by reference. All the references cited here are incorporated herein as a whole.

INDUSTRIAL APPLICABILITY

The glass sheet composite of the present invention can best fit especially for use in displays which do not need frames, since the boundary between the liquid layer and the seal material is unnoticeable. This glass sheet composite is also suitable for use, for example, as diaphragms in loudspeakers, microphones, earphones, mobile devices, etc. and as opening members for buildings or vehicles.

REFERENCE SIGNS LIST

| | |
|---|---|
| 10 | Glass sheet composite |
| 11 | First sheet |
| 11a | Main surface of first sheet |
| 11b | Edge surface of first sheet |
| 12 | Second sheet |
| 12a | Main surface of second sheet |
| 12b | Edge surface of second sheet |
| 20 | Liquid layer |
| 21 | Edge surface of liquid layer |
| 22 | Liquid ingredient |
| 30 | Seal material |
| 31 | Edge surface of seal material |

**Claims**

**1.** A glass sheet composite comprising
at least two sheets,
a liquid layer held between two adjacent sheets of the at least two sheets, and
a seal material provided to at least some of peripheries of the two sheets so as to seal up the liquid layer,
wherein at least one of the two sheets is a glass sheet and
a difference in photorefractive index between the liquid layer and the seal material is 0.015 or less.

**2.** The glass sheet composite according to claim 1, wherein the difference in photorefractive index is 0.010 or less.

**3.** The glass sheet composite according to claim 1 or 2, wherein the seal material is provided to the whole peripheries of the two sheets.

**4.** The glass sheet composite according to any one of claims 1 to 3, wherein edge surfaces of the two sheets and an edge surface of the seal material form a single surface.

**5.** The glass sheet composite according to any one of claims 1 to 3, wherein at least one of the two sheets have an edge surface comprising a tapered surface and
an edge surface of the seal material includes a curved surface continuous with the tapered surface of the sheet.

**6.** The glass sheet composite according to any one of claims 1 to 5, wherein the glass sheet has a specific modulus of $2.5\times10^7$ $m^2/s^2$ or higher.

**7.** The glass sheet composite according to any one of claims 1 to 6, wherein the liquid layer has a viscosity coefficient at 25°C of $1 \times 10^{-4}$ to $1 \times 10^3$ Pa·s and a surface tension at 25°C of 15 mN/m to 80 mN/m.

**8.** The glass sheet composite according to any one of claims 1 to 7, wherein the liquid layer has a thickness which is
1/10 or less of a total thickness of the two sheets when the total thickness of the two sheets is 1 mm or less, and
100 μm or less when the total thickness of the two sheets exceeds 1 mm.

**9.** The glass sheet composite according to any one of claims 1 to 8, comprising a physically strengthened glass sheet and/or a chemically strengthened glass sheet.

**10.** The glass sheet composite according to any one of claims 1 to 9, wherein the two sheets each have a thickness of 0.01-15 mm.

**11.** The glass sheet composite according to any one of claims 1 to 10, wherein the liquid layer comprises at least one oil selected from the group consisting of a dimethyl silicone oil, a methyl phenyl silicone oil, a methyl hydrogen silicone oil, and modified silicone oils.

**12.** The glass sheet composite according to any one of claims 1 to 11, wherein the seal material comprises at least one resin selected from the group consisting of a poly(vinyl acetate)-based resin, a poly(vinyl chloride)-based resin, a poly(vinyl alcohol)-based resin, an ethylene-copolymer-based resin, a poly(acrylic ester)-based resin, a cyanoacrylate-based resin, a saturated-polyester-based resin, a polyamide-based resin, a linear-polyimide-based resin, a melamine resin, a urea resin, a phenolic resin, an epoxy-based resin, a polyurethane-based resin, an unsaturated-polyester-based resin, a reactive acrylic resin, a rubber-based resin, a silicone-based resin, a modified-silicone-based resin, and a fluororesin.

**13.** A diaphragm comprising the glass sheet composite according to any one of claims 1 to 12 and at least one vibrator disposed on one or both surfaces of the glass sheet composite.

**14.** An opening member comprising the glass sheet composite according to any one of claims 1 to 12 or the diaphragm according to claim 13.

[Fig. 1]

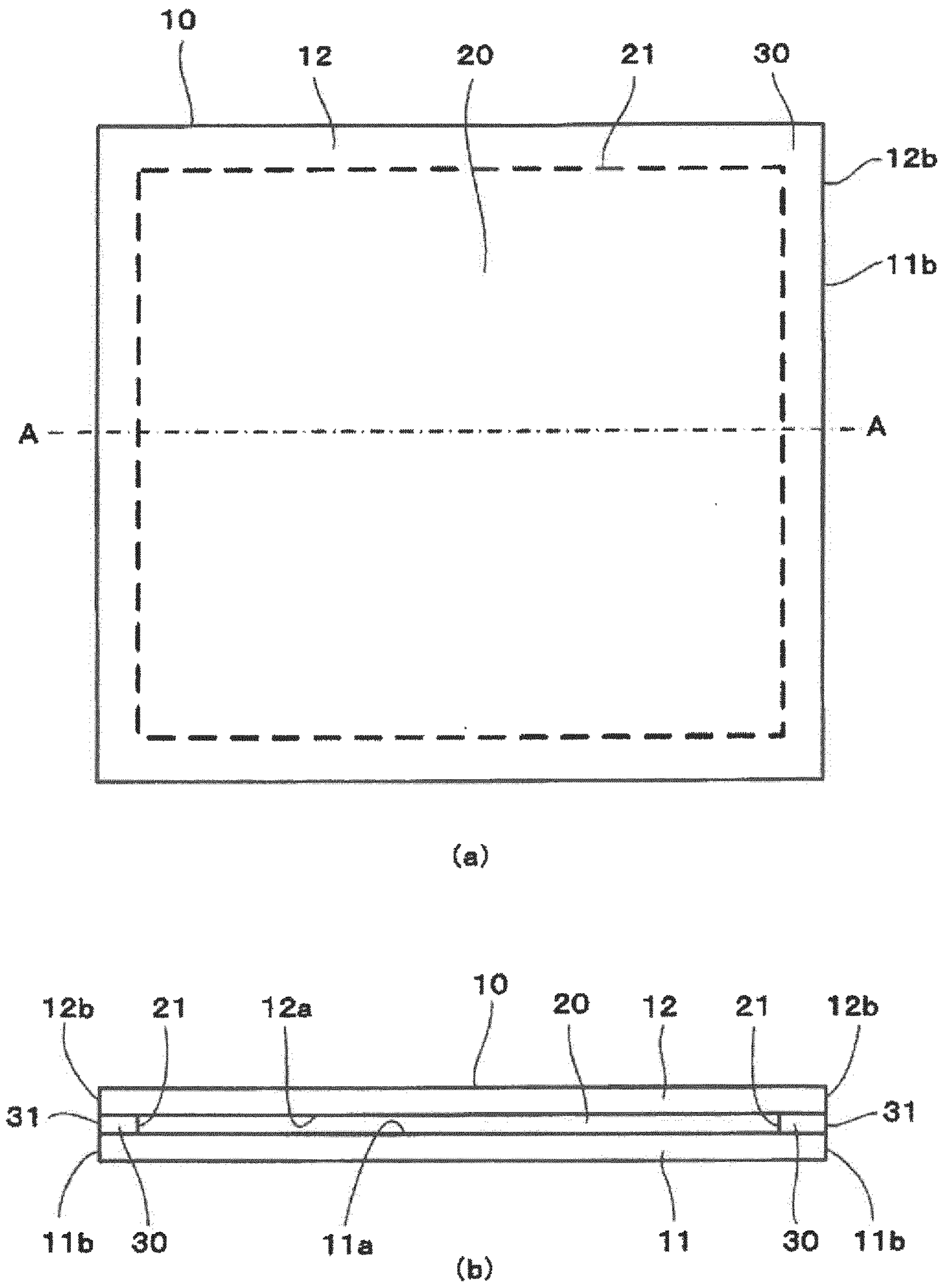
10
12
20
21
30
12b
11b
A
A
(a)
12b
21
12a
10
20
12
21
12b
31
31
11b
30
11a
11
30
11b
(b)

[Fig. 2]

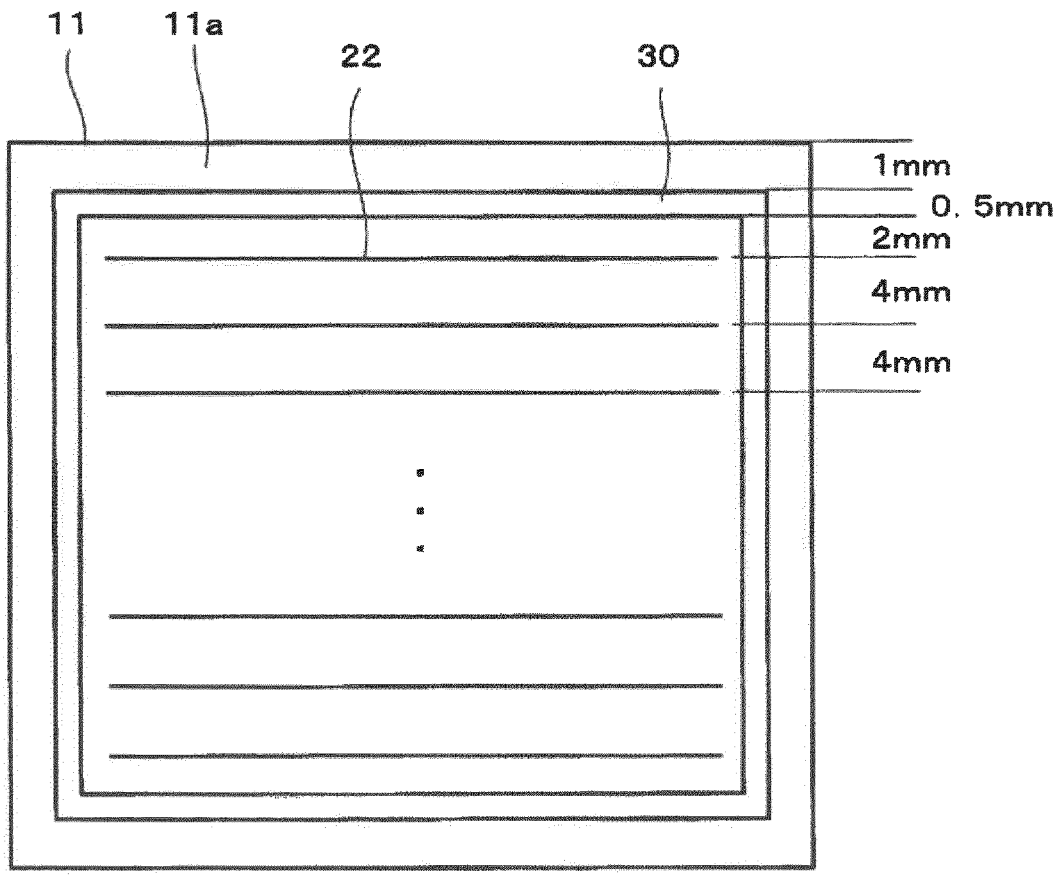

[Fig. 3]

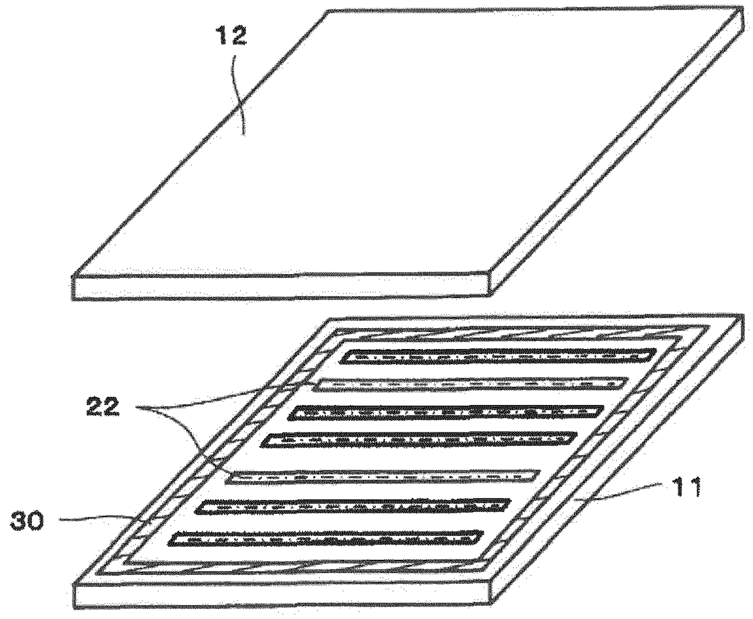


(a)

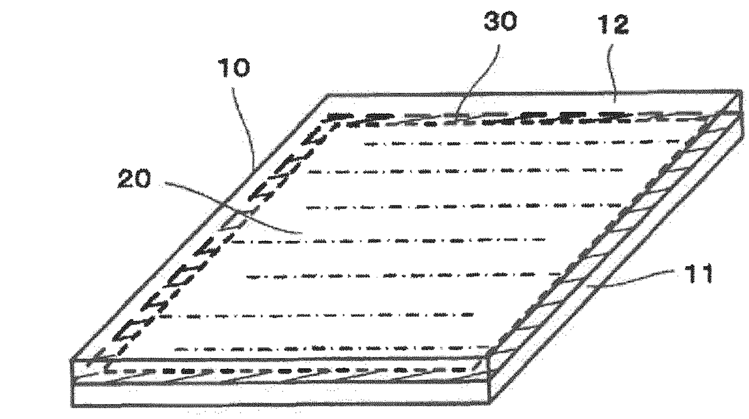


(b)

[Fig. 4]

| REFRACTIVE INDICES OF OILS (LIQUID SPACER LAYER) | | | | |
|---|---|---|---|---|
| LIQUID INGREDIENTS | | 486nm | 589nm | 656nm |
| FLUORINATED SILICONE OIL | a | 1.3855 | 1.3785 | 1.3820 |
| DIMETHYL SILICONE OIL | b | 1.4085 | 1.4030 | 1.4010 |
| METHYL PHENYL SILICONE OIL | c | 1.4360 | 1.4270 | 1.4260 |
| MODIFIED SILICONE OIL | d | 1.4530 | 1.4475 | 1.4450 |
| SYNTHETIC HYDROCARBON OIL | e | 1.4957 | 1.4890 | 1.4863 |
| SYNTHETIC HYDROCARBON OIL | f | 1.4966 | 1.4900 | 1.4875 |
| SYNTHETIC HYDROCARBON OIL | g | 1.5011 | 1.4950 | 1.4924 |

[Fig. 5]

REFRACTIVE INDICES OF SEAL MATERIALS

| SEAL MATERIALS (UV-CURED RESINS) | | 486nm | 589nm | 656nm |
|---|---|---|---|---|
| CURED FLUORORESIN | G | 1.3699 | 1.3665 | 1.3604 |
| CURED FLUORORESIN | H | 1.3950 | 1.3913 | 1.3909 |
| CURED FLUORORESIN | I | 1.3988 | 1.3947 | 1.3920 |
| CURED FLUORORESIN | A | 1.4020 | 1.4030 | 1.3990 |
| CURED SILICONE RESIN | J | 1.4150 | 1.4092 | 1.4023 |
| CURED SILICONE RESIN | B | 1.4176 | 1.4116 | 1.4101 |
| CURED SILICONE RESIN | C | 1.4345 | 1.4280 | 1.4252 |
| CURED SILICONE RESIN | D | 1.4336 | 1.4253 | 1.4234 |
| CURED SILICONE RESIN | E | 1.4360 | 1.4292 | 1.4234 |
| CURED SILICONE RESIN | F | 1.4360 | 1.4292 | 1.4272 |
| CURED SILICONE RESIN | K | 1.4558 | 1.4483 | 1.4454 |
| CURED ACRYLIC RESIN | L | 1.4853 | 1.4833 | 1.4796 |
| CURED ACRYLIC RESIN | M | 1.5035 | 1.4970 | 1.4940 |
| CURED ACRYLIC RESIN | N | 1.5040 | 1.4972 | 1.4943 |
| CURED ACRYLIC RESIN | O | 1.5145 | 1.5065 | 1.5025 |
| CURED ACRYLIC RESIN | P | 1.5185 | 1.5110 | 1.5076 |
| CURED ACRYLIC RESIN | Q | 1.5372 | 1.5340 | 1.5295 |
| CURED ACRYLIC RESIN | R | 1.5430 | 1.5375 | 1.5300 |

[Fig. 6]

Data from Examples

| SEAL MATERIALS | DIMETHYL SILICONE OIL | METHYL PHENYL SILICONE OIL |
|---|---|---|
| A | ○ | × |
| B | ○ | Δ |
| C | × | ○ |
| D | × | ○ |
| E | × | ○ |
| F | × | ○ |

※ ○: INVISIBLE; Δ: LESS INVISIBLE; ×: VISIBLE

[Fig. 7]

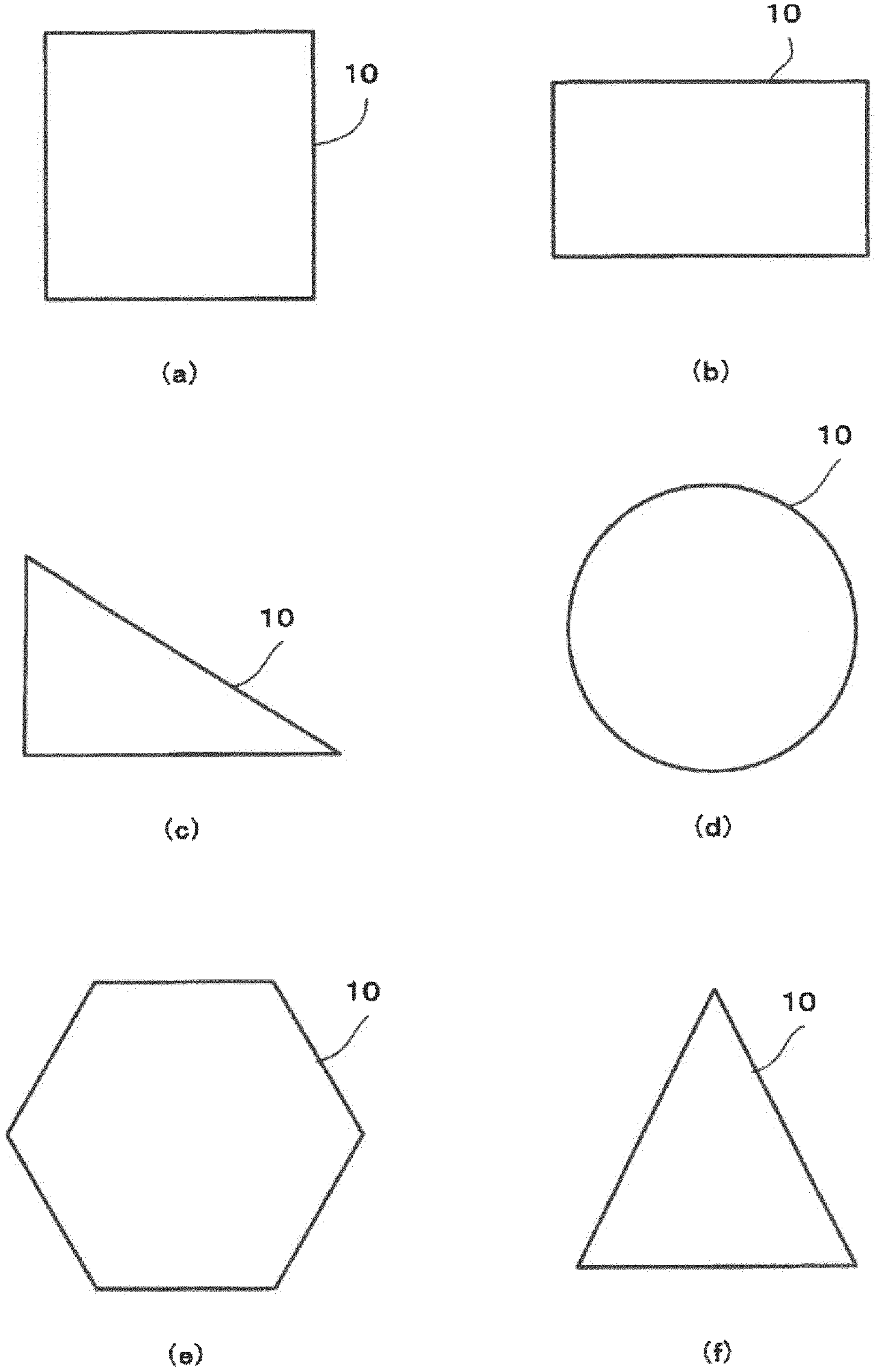

[Fig. 8]

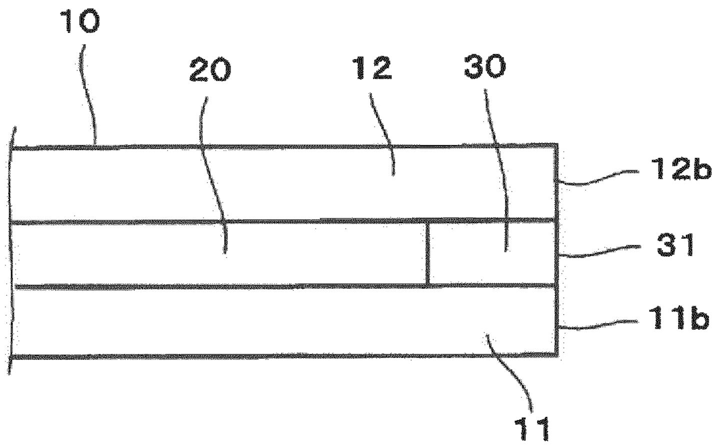
10
20
12
30
12b
31
11b
11

(a)

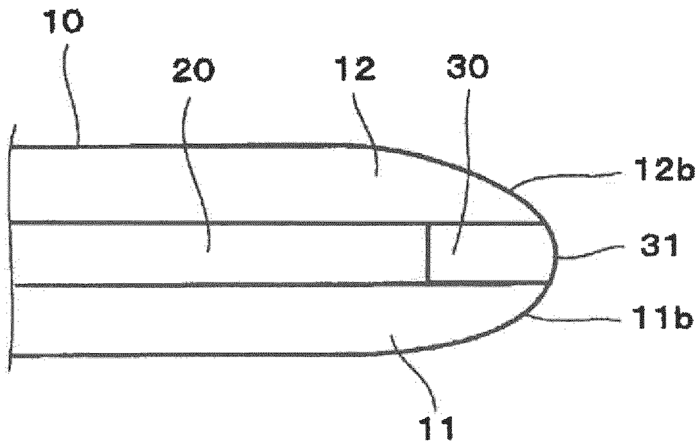
10
20
12
30
12b
31
11b
11

(b)

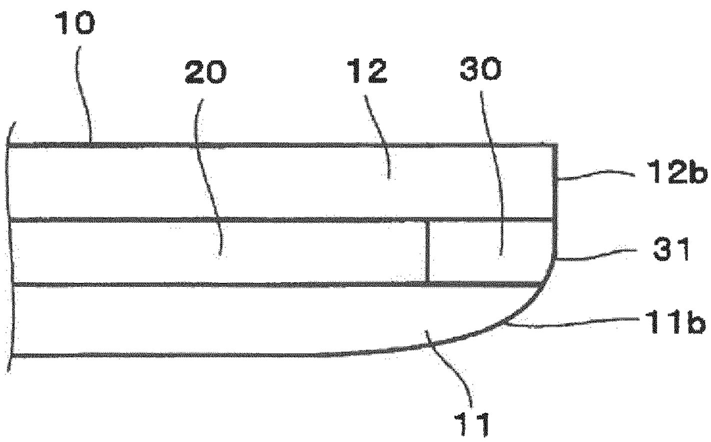
10
20
12
30
12b
31
11b
11

(c)

[Fig. 9]

| LIQUID INGREDIENT/SEAL MATERIAL COMBINATIONS | | | | | | | | |
|---|---|---|---|---|---|---|---|---|
| | | LIQUID INGREDIENT a | LIQUID INGREDIENT b | LIQUID INGREDIENT c | LIQUID INGREDIENT d | LIQUID INGREDIENT e | LIQUID INGREDIENT f | LIQUID INGREDIENT g |
| CURED FLUORORESIN | G | × | × | × | × | × | × | × |
| CURED FLUORORESIN | H | ○ | □ | × | × | × | × | × |
| CURED FLUORORESIN | I | □ | ○ | × | × | × | × | × |
| CURED FLUORORESIN | A | × | ○○ | × | × | × | × | × |
| CURED SILICONE RESIN | J | × | ○○ | × | × | × | × | × |
| CURED SILICONE RESIN | B | × | ○ | × | × | × | × | × |
| CURED SILICONE RESIN | C | × | × | ○○ | × | × | × | × |
| CURED SILICONE RESIN | D | × | × | ○○ | × | × | × | × |
| CURED SILICONE RESIN | E | × | × | ○○ | × | × | × | × |
| CURED SILICONE RESIN | F | × | × | ○○ | × | × | × | × |
| CURED SILICONE RESIN | K | × | × | × | ○○ | × | × | × |
| CURED ACRYLIC RESIN | L | × | × | × | × | ○ | ○ | □ |
| CURED ACRYLIC RESIN | M | × | × | × | × | ○ | ○ | ○○ |
| CURED ACRYLIC RESIN | N | × | × | × | × | ○ | ○ | ○○ |
| CURED ACRYLIC RESIN | O | × | × | × | × | × | × | □ |
| CURED ACRYLIC RESIN | P | × | × | × | × | × | × | × |
| CURED ACRYLIC RESIN | Q | × | × | × | × | × | × | × |
| CURED ACRYLIC RESIN | R | × | × | × | × | × | × | × |

## INTERNATIONAL SEARCH REPORT

International application No.
PCT/JP2018/037116

A. CLASSIFICATION OF SUBJECT MATTER
Int.Cl. H04R7/02(2006.01)i, B32B17/10(2006.01)i, C03C27/06(2006.01)i, H04R1/02(2006.01)i, H04R7/08(2006.01)i

According to International Patent Classification (IPC) or to both national classification and IPC

B. FIELDS SEARCHED

Minimum documentation searched (classification system followed by classification symbols)
Int.Cl. H04R7/02, B32B17/10, C03C27/06, H04R1/02, H04R7/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2009-100223 A (KENWOOD CORPORATION) 07 May 2009, paragraphs [0030], [0033], [0037], [0039], [0043], [0045], [0049], [0103], [0105] (Family: none) | 1-4, 6-14<br>6-14<br>5 |
| X<br>Y<br>A | JP 6-325868 A (FUJI ELECTRIC CO., LTD.) 25 November 1994, paragraph [0004], fig. 3 (Family: none) | 1-4<br>6-14<br>5 |
| A | JP 2012-79445 A (PANASONIC CORP.) 19 April 2012, paragraph [0015] (Family: none) | 1-14 |
| A | JP 2005-190683 A (CANON INC.) 14 July 2005, paragraph [0014], fig. 1, 4 (Family: none) | 5 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 December 2018 (13.12.2018) | 25 December 2018 (25.12.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5227590 A
- JP 2017194637 A

### Non-patent literature cited in the description

- **OLIVIER MAL.** A Novel Glass Laminated Structure for Flat Panel Loudspeakers. *AES Convention,* vol. 124, 7343